# EUROPEAN PATENT APPLICATION

(11) **EP 1 265 423 A1**
(43) Date of publication of application: **11.12.2002**
(21) Application number: 01114013.4
(22) Date of filing: 08.06.2001
(51) Int. Cl.: H04M 1/02, G06F 1/16, G06F 3/033

(54) **Structure of the operation interfaces for a mobile phone / PDA**

(71) Applicant: Inventec Appliances Corp., Wugu Shiang, Taipei (TW)
(72) Inventor: Lai, Cheng-Shing, Wugu Shiang, Taipei (TW); Huang, Wen-Yuan, Shangai (CN)
(74) Representative: TER MEER STEINMEISTER & PARTNER GbR

(57) **Abstract**

A structure of the operation interfaces on mobile phones is disclosed. Two operation interfaces that can be alternatively used are designed on a mobile phone to provide an appropriate human-machine operation interface. A flappable cover is provided on the mobile phone. When the cover is closed, its exposed surface has a dialing keypad with keys for dialing and relevant communication functions. The other side of the cover is installed with character input keyboard for word or character input. Along with a large display screen for manual writing input, a user can select an appropriate interface from them according to his needs.

The display could have a touch sreen property. The cover is foldable connected via a hinge to the main body of the phone.

## Description

### BACKGROUND OF THE INVENTION

### Field of Invention

The invention relates to operation interfaces on mobile phones and, more particularly, to PDA (Personal Digital Agent) mobile phone operation interfaces that combine the function of a mobile phone and a PDA.

### Related Art

Along with the rapid development in information industry, information technology products are changing and updating all the time. The mobile phone is one representative of such high-tech information technology products. Pushed by IT (Internet Telephone) merchants, checking the latest information online through the mobile phone becomes more and more popular. Therefore, mobile phones combining the PDA and wireless online functions are thus thriving.

These types of mobile phones with PDA and wireless online functions are equipped with more data input operation interfaces due to the extra needs. Known human-machine operation interfaces can be roughly classified into the following types:
1. Writing input: It provides a manual writing input interface, which is usually a touch-control screen along with an input pen. The user can perform operations or data input directly through the touch-control screen without pressing keys.
2. Writing input + keyboard input: In addition to the above-mentioned touch-control screen, it also provides keys for the user to enter characters.
3. Dial keys + writing input: In addition to the above-mentioned touch-control screen, it further provides number-letter keys, such as the English letter input interface embedded in the number keys (0∼9).

From pass experiences, we realized that the above-mentioned operation interfaces have their own advantages and disadvantages. They are either inconvenient in text or character input or not suitable for quick dialing.

### SUMMARY OF THE INVENTION

An object of the invention is to solve the problems of the above-mentioned known products, providing mobile phones an appropriate human-machine operation interface that allows quick dialing and easy text or character input.

Another object of the invention provides operation interfaces that can be used alternatively. A user can select an appropriate operation interface to dial numbers or input data.

The main technique disclosed in the invention is a cover that can be opened or closed. The opposite surfaces of the cover are installed with a dialing keypad and a character input keyboard for text or character input, respectively. Therefore, a user can select an appropriate operation interface to dial numbers or input data according to his needs.

Another preferred embodiment of the invention further provides a touch-control screen on the surface covered by the cover. When a user opens the cover, not only can he use the character input keyboard on the back of the cover but he is also able to enter texts or characters on the touch-control screen using a touch-control pen.

### BRIEF DESCRIPTION OF THE DRAWINGS

The present invention will become more fully understood from the detailed description given hereinbelow illustration only, and thus are not limitative of the present invention, and wherein:
FIG. 1 shows a structure of the invention with the cover closed;
FIG. 2 shows a structure of the invention with the cover opened; and

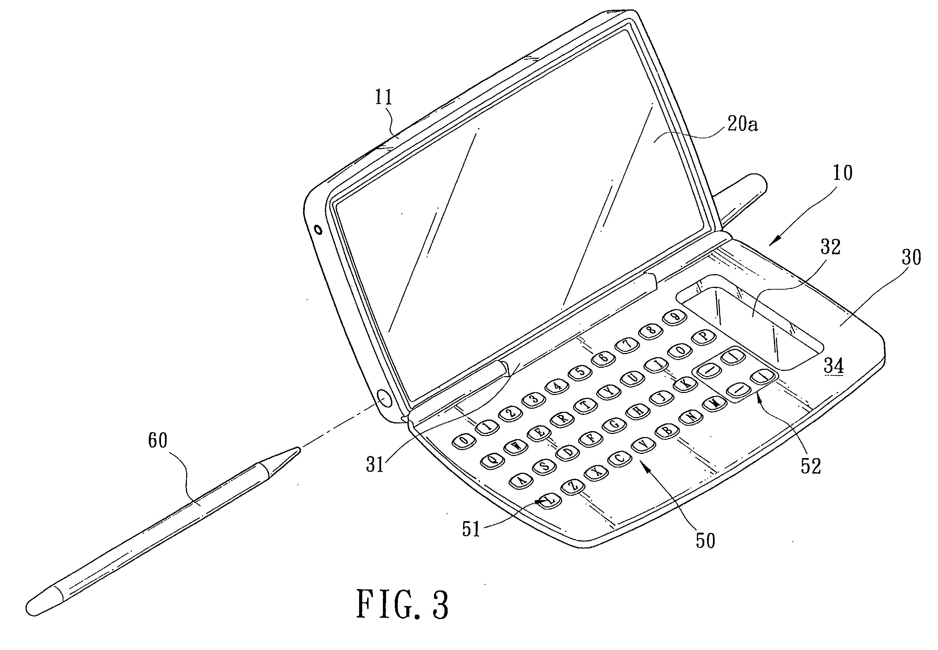

FIG. 3 shows another embodiment of the invention, illustrating the structure for manual writing input operations.

### DETAILED DESCRIPTION OF THE INVENTION

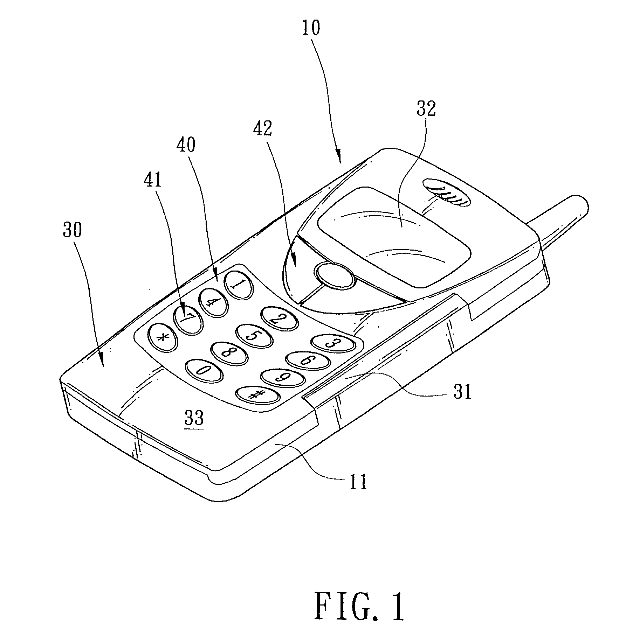

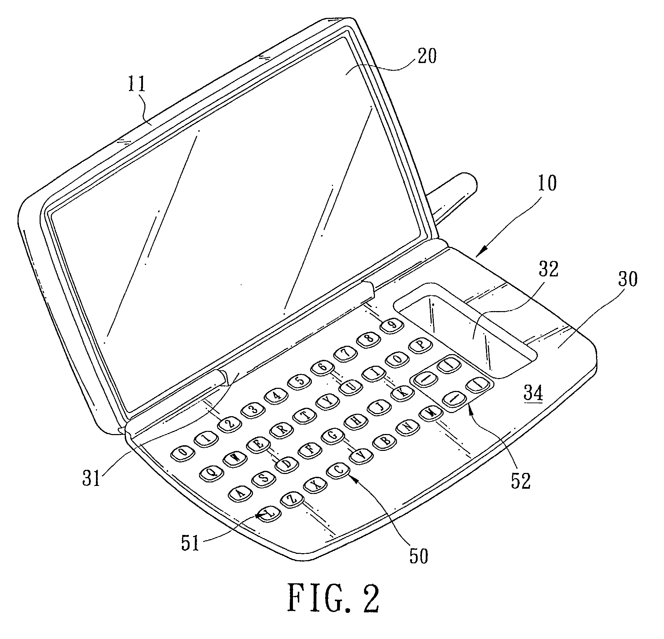

With reference to FIGS. 1 and 2, in addition to the structures, such as the wireless communication transceiving module, battery and antenna, a usual mobile phone has, the mobile phone 10 disclosed herein further has the following components to achieve the objects of the invention:
- A main body 11: It accommodates essential components of a mobile phone 10 (e.g., the wireless communication transceiving module, battery, and antenna mentioned above).
- A display screen 20: It is installed on the surface of the main body 11 to display information.
- A cover 30: It has a hinge 31 on one side and connects to the main body 11 of the mobile phone 10 thereby. The cover 30 further has a window 32. With the designed hinge 31, the cover 30 can be opened (FIG. 2) or closed (FIG. 1). When it is closed, most information display area of the display screen 20 on the main body 11 is hid by the cover 30, with only partial information displayed to the user through the window 32. Such information usually relates to dialing or communication processes of the mobile phone 11.
- A dialing keypad 40: It is installed on the outer surface 33 of the cover 30. The outer surface 33 refers to the exposed surface when the cover 30 is closed on the main body 11 of the mobile phone 10 (FIG. 1). The keypad contains function keys for dialing and communications, such as a number key group 41 and a special function key group 42. Through this dialing keypad 40, the user can perform calling operations.
- A character input keyboard 50: It is installed on the inner surface 34 of the cover 30. The inner surface 34 refers to the hidden surface when the cover 30 is closed on the main body 11 of the mobile phone 10 (FIG. 2). The keyboard contains a character key group 51 for entering different characters (e.g. English letters, numbers, or special symbols) and even a direction key group 52 for controlling the cursor motion in the display screen 20.

Therefore, when using normal mobile phone dialing and communication operations, the user can use the dialing keypad 40 on the outer surface 33 with the cover 30 closed. He can monitor such information as signal strength, battery power and phone numbers through the window 32.

On the contrary, when the user wants to the PDA or online function of the mobile phone 10, he only needs to open the cover 30 and is then able to easily enter characters, edit texts or browse websites through the character keyboard 50 installed on the inner surface 34 of the cover 30. He can check relevant information on the complete display screen 20.

In accordance with another embodiment of the invention, a touch-control screen 20 can be used to replace the display screen 20 that has only the display function. An input pen 60 is then provided for the user to enter characters or texts in another way.

### Effects of the Invention

The operation interfaces disclosed herein allow users to quickly and easily perform dialing or data input operations while using the PDA and online functions by selecting an appropriate operation interface according to the needs.

Certain variations would be apparent to those skilled in the art, which variations are considered within the spirit and scope of the claimed invention.

## Claims

1. A structure of operation interfaces on mobile phones for providing dialing and data input operation interfaces on mobile phones with PDA (Personal Digital Agent) functions, which comprises:
a display screen, which is installed on the surface of a main body of the mobile phone to display information;
a cover, which has a hinge on one side, thereby connecting to the main body of the mobile phone, and a window, and can be opened or closed, hiding most information display area of the display screen;
a dialing keypad, which is installed on an outer surface of the cover, containing function keys for dialing and communication functions;
a character input keyboard, which is installed on an inner surface of the cover, containing a character key group for entering different characters.

2. The structure of claim 1, wherein the outer surface refers to the exposed surface when the cover is closed on the main body of the mobile phone.

3. The structure of claim 1, wherein the function keys contained in the dialing keypad form a number key group.

4. The structure of claim 1, wherein the function keys contained in the dialing keyboard form a special function key group for users to make phone calls.

5. The structure of claim 1, wherein the inner surface of the cover refers to the hidden surface when the cover is closed on the main body of the mobile phone.

6. The structure of claim 1, wherein the character key group of the character input keyboard contains a character key group for entering English letters.

7. The structure of claim 1, wherein the character key group of the character input keyboard contains a character key group for entering numbers.

8. The structure of claim 1, wherein the character key group of the character input keyboard contains a character key group for entering special symbols.

9. The structure of claim 1, wherein the character key group of the character input keyboard contains a direction key group for controlling cursor motion in the display screen.

10. The structure of claim 1, wherein the display screen is a touch-control screen and an input pen entering data through the touch-control screen.
